# FASCICULE DE BREVET EUROPEEN

(11) **EP 3 714 617 B1**
(45) Date de publication et mention de la délivrance du brevet: **27.07.2022**
(21) Numéro de dépôt: 18800994.8
(22) Date de dépôt: 20.11.2018
(51) Int. Cl.: H04W 12/30, H04W 12/42, H04W 8/18, H04L 9/40

(54) **PROCÉDÉ D'ASSISTANCE À LA CONFIGURATION À DISTANCE D'UNE CARTE EUICC ET SYSTÈME METTANT EN OEUVRE UN TEL PROCÉDÉ**
VERFAHREN ZUR UNTERSTÜTZUNG DER FERNKONFIGURATION EINER EUICC-KARTE UND SYSTEM ZUR DURCHFÜHRUNG EINES SOLCHEN VERFAHRENS
METHOD FOR ASSISTANCE WITH THE REMOTE CONFIGURATION OF AN EUICC CARD AND SYSTEM FOR IMPLEMENTING SUCH A METHOD

(30) Priorité: 21.11.2017 FR 1761023
(43) Date de publication de la demande: 30.09.2020
(73) Titulaire: Sigfox, 31670 Labege (FR)
(72) Inventeur: LARIGNON, Guillaume, 31670 Labège (FR)
(74) Mandataire: Ipside
(86) Numéro de dépôt international: PCT/EP2018/081956
(87) Numéro de publication internationale: WO 2019/101748

(56) Documents cités:
- EP-A1- 2 680 628
- US-A1- 2013 157 673
- US-A1- 2016 269 386

## Description

### DOMAINE TECHNIQUE

La présente invention appartient au domaine des cartes à puce utilisées en téléphonie mobile pour stocker les informations spécifiques à un abonnement à un réseau mobile. Plus particulièrement, l'invention concerne un procédé de configuration à distance d'une telle carte à puce.

### ÉTAT DE LA TECHNIQUE

Une carte SIM (acronyme anglais de « *Subscriber Identity Module »)* est une puce électronique contenant un microcontrôleur et de la mémoire utilisée en téléphonie mobile pour stocker et gérer des informations relatives à un abonnement auprès d'un opérateur d'un réseau de téléphonie mobile tel que par exemple les réseaux GSM (acronyme anglais de « *Global System for Mobile Communications* »), UMTS (acronyme anglais de « *Universal Mobile Télécommunications System* »), LTE (acronyme anglais de « *Long Term Evolution* »), etc.

Traditionnellement, une carte SIM est destinée à être insérée dans un téléphone mobile par un utilisateur qui vient de souscrire à un abonnement. Si par la suite l'utilisateur change d'opérateur de réseau de téléphonie mobile et/ou d'abonnement, il peut alors la remplacer par une nouvelle carte SIM qui contient les informations liées à son nouvel abonnement. Il existe différents formats de carte SIM qui ont évolué avec le développement et la miniaturisation des téléphones mobiles.

Le fait de devoir changer de carte SIM pour modifier un abonnement ou pour s'adapter à un nouveau modèle de téléphone mobile entraîne cependant des délais pour l'utilisateur et des coûts pour l'opérateur.

En outre, les cartes SIM traditionnelles sont mal adaptées à des terminaux de type M2M (acronyme anglais de « *Machine To Machine* ») ou à des objets connectés de type « Internet des objets » (en anglais « *Internet Of Things »* ou IoT) qui sont par exemple connectés à l'Internet à travers des réseaux d'accès de téléphonie mobile (il peut s'agir par exemple d'un appareil de télérelève ou de télésurveillance, d'un module de communication sans fil d'une voiture autonome, d'un capteur sans fil connecté pour « ville intelligente », etc.). L'insertion et le remplacement des cartes SIM pour des terminaux de type M2M ou IoT génèrent en effet des coûts logistiques importants qui sont un réel obstacle pour le modèle économique lié à ce genre de produits. De plus, ces terminaux ont souvent des contraintes mécaniques ou des exigences de miniaturisation qui rendent l'accès à la carte SIM particulièrement difficile, quand ce ne sont pas les terminaux eux-mêmes qui ne sont pas accessibles.

C'est pourquoi le GSMA (acronyme anglais de « *GSM Association »,* une association internationale d'opérateurs de téléphonie mobile) a développé des normes introduisant une carte SIM inamovible connue sous le nom de eUICC (acronyme anglais de « *Embedded Universal Integrated Circuit Card* ») ou eSIM (pour « *Embedded SIM»*) ainsi que les solutions permettant de modifier à distance le contenu et donc le fonctionnement de ladite carte SIM inamovible.

Les normes relatives à l'eUICC développées par le GSMA définissent notamment deux modèles différents. Le premier modèle s'adresse aux appareils destinés au grand public, comme par exemple un téléphone mobile, une tablette tactile, une montre ou un bracelet connecté, etc. Une caractéristique de ce modèle est que la configuration à distance de la carte eUICC est initiée par un utilisateur et repose sur des moyens de communication fournis par cet utilisateur, comme par exemple une connexion Wi-Fi. Le deuxième modèle s'adresse en revanche aux appareils de type M2M pour lesquels la configuration à distance de la carte eUICC s'effectue sans l'intervention d'un utilisateur.

Dans le cas particulier du modèle destiné aux terminaux de type M2M, la carte eUICC doit comporter les informations minimales nécessaires à l'établissement d'une communication sans fil pour une première configuration à distance de la carte. Ces informations minimales sont stockées dans la mémoire de la carte dans un « profil de provision ». Quant aux informations de configuration relatives à un abonnement commercial auprès d'un opérateur de réseau de téléphonie mobile, elles sont stockées dans un « profil opérationnel ». Une carte SIM inamovible de type eUICC contient alors au moins un profil de provision actif et éventuellement un ou plusieurs profils opérationnels susceptibles d'être activés ultérieurement. Le profil de provision est utilisé pour configurer la carte eUICC à distance lors de la première connexion, et éventuellement lors d'une connexion de secours dans le cas où un profil opérationnel n'est subitement plus fonctionnel. Un profil opérationnel est quant à lui téléchargé et/ou activé à distance lors d'une procédure de configuration de la carte, et il est ensuite utilisé pour établir des communications entre le terminal et le réseau de téléphonie mobile selon l'abonnement souscrit. Un seul profil peut être activé à un moment donné. Un profil opérationnel peut jouer le rôle de profil de provision, mais l'inverse n'est généralement pas vrai.

Parmi les informations minimales nécessaires contenues dans le profil de provision se trouvent notamment un numéro unique permettant à un réseau de téléphonie mobile d'identifier un usager (il s'agit de l'IMSI, acronyme anglais de « *International Mobile Subscriber Identity* »), et une clé d'authentification (dite clé Ki). Ces ressources sont enregistrées dans le profil de provision de la carte eUICC au moment de sa fabrication, et elles sont réservées par l'opérateur de réseau de téléphonie mobile qui est responsable de supporter la première connexion et d'éventuelles connexions de secours pendant tout le cycle de vie de la carte eUICC. Or, il s'avère qu'il est particulièrement onéreux pour un opérateur de réseau de téléphonie mobile de provisionner de manière permanente ce genre de ressources alors qu'elles ne sont utilisées que pour des procédures courtes et dans des situations peu fréquentes.

La demande de brevet EP 2680628 A1 divulgue la possibilité de mémoriser différents profils de provisions de façon hiérarchique dans une carte eUICC. Les profils de provision peuvent permettre l'établissement d'une communication avec un réseau d'accès de provision d'un système de communication sans fil qui peut être un système cellulaire, un système de type Wi-Fi, ou un système de communication à faible portée de type NFC. Un profil de provision présent sur la carte eUICC est sélectionné pour établir une communication IP sur laquelle le profil opérationnel pourra être téléchargé. Toutefois, un réseau de provision de type Wi-Fi ou NFC présente une portée géographique limitée par rapport à un réseau cellulaire. Dans le cas d'un réseau de provision de type cellulaire, il est proposé d'utiliser un IMSI de provision (MCC = 999) permettant d'établir une communication avec le réseau de provision.

La demande de brevet US 2013/157673 A1 décrit une autre méthode pour provisionner une carte eUICC via un réseau de provision de type cellulaire. Pour ne pas avoir à réserver à l'avance un IMSI pour le profil de provision, D2 propose d'adapter la fonctionnalité d'appel d'urgence de la norme 3GPP (« Emergency Calls (EC) in Limited Service State (LSS) ») pour que cette fonctionnalité permette d'établir une communication pour le transfert d'un profil opérationnel même sans IMSI.

### EXPOSÉ DE L'INVENTION

La présente invention a pour objectif de remédier à tout ou partie des inconvénients de l'art antérieur, notamment ceux exposés ci-avant.

A cet effet, et selon un premier aspect, la présente invention concerne une carte à puce selon la revendication 1 configurable à distance destinée à être intégrée de manière inamovible dans un terminal, dite carte eUICC, mémorisant un profil de provision comportant des données utilisées par ledit terminal pour communiquer avec un réseau d'accès d'un premier système de communication sans fil, dit réseau de provision, afin d'installer et/ou d'activer sur ladite carte eUICC un profil opérationnel comportant des données relatives à un abonnement souscrit par un utilisateur du terminal auprès d'un opérateur d'un autre réseau d'accès dudit premier système de communication sans fil, dit réseau opérationnel. En outre, le profil de provision de ladite carte eUICC est incomplet, autrement dit une ou plusieurs données manquantes indispensables à l'établissement d'une communication entre le terminal et le réseau de provision ne sont pas définies par défaut dans le profil de provision initialement sauvegardé sur la carte eUICC. La carte eUICC est configurée pour compléter le profil de provision avec les données manquantes obtenues par le terminal en établissant une communication préalable avec un réseau d'accès d'un deuxième système de communication sans fil, dit réseau d'assistance, ledit deuxième système de communication sans fil étant distinct dudit premier système de communication sans fil.

De telles dispositions permettent notamment d'éviter à un opérateur d'un réseau de provision du premier système de communication sans fil d'avoir à réserver certaines ressources couteuses dans des équipements de son réseau pendant des périodes où elles ne sont pas utiles.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, la carte eUICC comporte en outre un profil d'assistance comportant des données permettant l'accès dudit terminal audit réseau d'assistance.

Dans des modes particuliers de réalisation, les données manquantes au profil de provision comportent l'un au moins des éléments suivants:
- une indication que le profil de provision est actif,
- une partie au moins d'un identifiant unique, dit IMSI, du profil de provision auprès du réseau de provision,
- un identifiant d'un algorithme d'authentification et/ou une clé d'authentification, dite clé Ki, du profil de provision,
- un identifiant d'un réseau d'accès du premier système de communication sans fil, dit réseau d'itinérance, lié au réseau de provision.

De telles dispositions peuvent notamment permettre de choisir un réseau d'itinérance pour lequel les accords d'itinérance vers le réseau de provision sont les plus avantageux en termes de coût au moment où la configuration à distance de la carte eUICC a lieu. Ce choix peut par exemple être fait en fonction de la position géographique du terminal si cette information est disponible.

Dans des modes particuliers de réalisation, le profil de provision comporte un ensemble de valeurs possibles préconfigurées pour au moins une donnée manquante, et un identifiant d'une valeur dudit ensemble est obtenue à travers ladite communication préalable établie entre le terminal et le réseau d'assistance.

De telles dispositions permettent notamment de réduire la taille des données transmises par le réseau d'assistance au terminal.

Dans des modes particuliers de réalisation, la carte eUICC comporte plusieurs profils de provision incomplets, et elle est configurée pour déterminer un profil de provision à utiliser à partir d'un identifiant obtenu à travers la communication préalable établie entre le terminal et le réseau d'assistance.

De telles dispositions peuvent notamment permettre de choisir un profil de provision particulièrement avantageux en termes de coût au moment où la configuration à distance de la carte eUICC a lieu. Ce choix peut par exemple être fait en fonction de la position géographique du terminal si cette information est disponible.

Selon un deuxième aspect, la présente invention concerne un terminal selon la revendication 5 comportant une carte eUICC selon l'un quelconque des modes de réalisation précédents.

Dans des modes particuliers de réalisation, le terminal est configuré pour déterminer une information sur une position géographique courante du terminal et pour transmettre cette information au réseau d'assistance à travers ladite communication préalable.

Selon un troisième aspect, la présente invention concerne un réseau d'assistance pour un terminal selon l'un quelconque des modes de réalisation précédents. Ledit réseau d'assistance est relié à une entité de gestion d'abonnements, et configuré pour obtenir auprès de ladite entité de gestion d'abonnement et pour transmettre audit terminal des données manquantes à un profil de provision incomplet de la carte eUICC du terminal.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, le réseau d'assistance est configuré pour fournir une information sur une position géographique courante du terminal à l'entité de gestion d'abonnements.

Dans des modes particuliers de réalisation, le réseau d'assistance est un réseau étendu de communication sans fil bas débit. Par « réseau étendu » et « bas débit », on entend un réseau du type LPWAN (acronyme anglais de « *Low Power Wide Area Network* ») dont les débits sont inférieurs à 100 kbits/s. De tels réseaux présentent en général des coûts pour un opérateur bien inférieur à ceux d'un réseau de téléphonie mobile du type GSM, UMTS ou LTE.

Selon un quatrième aspect, la présente invention concerne une entité de gestion d'abonnements d'une carte eUICC d'un terminal selon l'un quelconques des modes de réalisation précédents. Ladite entité de gestion d'abonnements est reliée à un réseau d'assistance selon l'un quelconque des modes de réalisation précédents, et elle est configurée pour fournir audit réseau d'assistance des données manquantes à un profil de provision incomplet de la carte eUICC du terminal.

Dans des modes particuliers de réalisation, l'entité de gestion d'abonnements est configurée pour déterminer l'une au moins des données manquantes à un profil de provision incomplet de la carte eUICC en fonction d'une information sur une position géographique courante du terminal.

Selon un cinquième aspect, la présente invention concerne un système selon la revendication 12 comportant une entité de gestion d'abonnement selon l'un quelconque des modes de réalisation précédents, au moins un terminal selon l'un quelconque des modes de réalisation précédents, ainsi qu'un premier et un deuxième systèmes de communication sans fil distincts, ledit deuxième système de communication sans fil comportant un réseau d'assistance selon l'un quelconque des modes de réalisation précédents.

Selon un cinquième aspect, la présente invention concerne un procédé d'assistance selon la revendication 13 pour configurer à distance une carte eUICC d'un terminal, mis en œuvre par un système selon l'un quelconque des modes de réalisation précédents, et comportant les étapes principales suivantes:
- envoi d'une requête par le terminal sur le réseau d'assistance du deuxième système de communication sans fil pour compléter un profil de provision de ladite carte eUICC,
- obtention de données manquantes audit profil de provision par le réseau d'assistance auprès de l'entité de gestion d'abonnements,
- envoi des informations obtenues au terminal sur le réseau d'assistance,
- mise à jour, par la carte eUICC, du profil de provision avec les informations obtenues,
- configuration à distance de la carte eUICC à travers un réseau de provision dudit premier système de communication sans fil à l'aide du profil de provision complété.

Dans des modes particuliers de mise en œuvre, une partie au moins des informations obtenues par le réseau d'assistance auprès de l'entité de gestion d'abonnements sont définies en fonction d'une information sur une position géographique courante du terminal.

### PRÉSENTATION DES FIGURES

L'invention sera mieux comprise à la lecture de la description suivante, donnée à titre d'exemple nullement limitatif, et faite en se référant aux figures 1 à 6 qui représentent :
- Figure 1 : une représentation schématique d'un premier exemple de configuration à distance d'une carte eUICC selon les normes GSMA,
- Figure 2 : une représentation schématique d'un deuxième exemple de configuration à distance d'une carte eUICC selon les normes GSMA,
- Figure 3 : une représentation schématique d'un premier exemple de configuration à distance d'une carte eUICC selon l'invention,
- Figure 4 : une représentation schématique d'un deuxième exemple de configuration à distance d'une carte eUICC selon l'invention,
- Figure 5: une représentation schématique d'un système comportant les différents éléments impliqués dans un procédé d'assistance à la configuration à distance d'une carte eUICC selon l'invention,
- Figure 6 : une représentation schématique des principales étapes d'un procédé d'assistance à la configuration à distance d'une carte eUICC selon l'invention.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

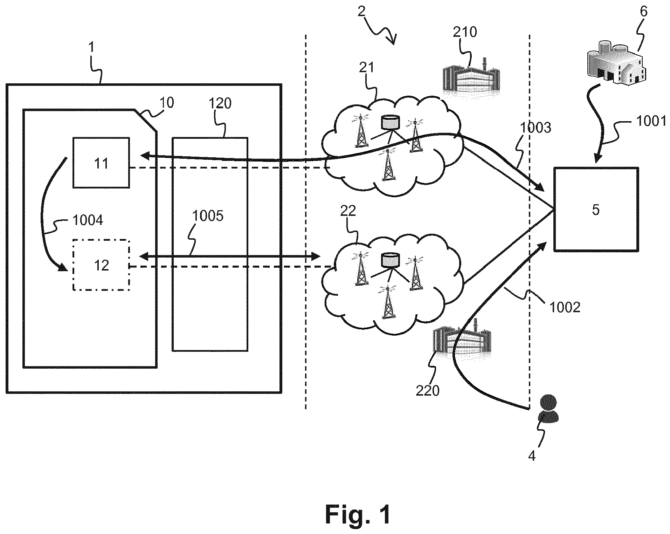

La figure 1 représente schématiquement comment une carte 10 eUICC d'un terminal 1 peut être configurée à distance selon des procédures définies par les normes GSMA relatives aux cartes SIM inamovibles telles que *« Embedded SIM Remote Provisioning Architecture (Version 1.1, 17 December 2013) »* ou « *Remote Provisioning Architecture for Embedded UICC Technical Spécification (Version 3.1, 27 May 2016) ».* Plus particulièrement, la figure 1 décrit à titre d'exemple nullement limitatif la procédure par laquelle un nouveau profil 12 opérationnel peut être téléchargé, installé et activé à distance sur une carte 10 eUICC.

Une carte 10 eUICC comporte au moins un profil 11 de provision contenant des applications et des données permettant à un terminal 1 de communiquer avec un réseau d'accès d'un premier système 2 de communication sans fil, dit réseau 21 de provision.

Dans la suite de la description, on se place à titre d'exemple nullement limitatif dans le cas où ledit premier système 2 de communication sans fil est un réseau cellulaire de téléphonie mobile tel que les réseaux GSM, UMTS ou LTE.

Dans la suite de la description, on entend par «réseau 21, 22 d'accès » un sous-réseau d'un système 2 de communication sans fil géré par un opérateur 210, 220. Un tel réseau 21, 22 d'accès comprend l'ensemble des moyens de télécommunications servant à relier un terminal 1 à un commutateur d'un réseau d'infrastructure tel qu'internet par exemple. Un tel réseau 21, 22 d'accès comprend par exemple des stations de base et d'autres équipements d'un réseau cellulaire de téléphonie mobile servant au routage et au multiplexage des données, à la localisation et à l'itinérance des abonnés, etc.

Pour communiquer avec ledit premier système 2 de communication sans fil, le terminal 1 comporte un module 120 de communication qui inclut, de manière conventionnelle, un ensemble de moyens matériels et/ou logiciels considérés comme connus de l'homme de l'art, pour envoyer et recevoir des messages échangés entre le terminal 1 et un réseau 21, 22 d'accès du premier système 2 de communication sans fil. Le terminal 1 peut par exemple être un téléphone mobile, une tablette tactile, ou bien un objet connecté de type M2M ou IoT, destiné à être connecté à un réseau 21, 22 d'accès du premier système 2 de communication sans fil.

La carte 10 eUICC peut en outre comporter un ou plusieurs profils 12 opérationnels contenant chacun des applications et des données relatives à un abonnement souscrit par un utilisateur 4 du terminal 1 auprès d'un opérateur 220 d'un réseau 22 d'accès du premier système 2 de communication sans fil, dit réseau 22 opérationnel.

Le rôle d'un profil 11 de provision d'une carte 10 eUICC d'un terminal 1 est exclusivement de permettre l'accès dudit terminal 1 à un réseau 21 de provision dans le but d'établir des communications entre le terminal 1 et une entité 5 de gestion d'abonnements visant à configurer à distance ladite carte 10 eUICC.

Le rôle d'un profil 12 opérationnel d'une carte 10 eUICC d'un terminal 1 permet en revanche audit terminal 1 d'accéder à un réseau 22 opérationnel offrant, en fonction de l'abonnement associé audit profil 12 opérationnel souscrit par l'utilisateur 4 auprès de l'opérateur 220 du réseau 22 opérationnel, des services commerciaux tels qu'un accès à internet, des services de messagerie ou de téléphonie mobile, etc.

L'entité 5 de gestion d'abonnements supporte par exemple les fonctions de préparation et de transport sur l'air (transport OTA, de l'anglais « *Over The Air »)* des profils 11, 12 à installer sur la carte 10 eUICC. Ce sont notamment les rôles des entités SM-DP (« *Subscription Manager Data Preparation* ») et SM-SR (« *Subscription Manager Secure Routing* ») décrites par les normes GSMA. L'entité 5 de gestion d'abonnements permet de configurer à distance une carte 10 eUICC à travers différentes procédures comme par exemple le téléchargement et l'installation d'un nouveau profil 11, 12, ou bien l'activation, la désactivation, l'effacement ou la mise à jour de certains paramètres d'un profil 11, 12 particulier.

Parmi les applications et les données d'un profil 11, 12 de la carte 10 eUICC permettant au terminal 1 de communiquer avec un réseau 21, 22 d'accès du système 2 de communication sans fil figurent notamment :
- un numéro unique permettant l'identification de l'abonnement de l'utilisateur 4 auprès d'un opérateur 210, 220, dit numéro IMSI,
- une clé d'authentification, dite clé Ki,
- une application configurée pour permettre l'authentification de l'utilisateur 4 lors d'une connexion au réseau 21, 22 d'accès en utilisant le numéro IMSI et la clé Ki.

Ces éléments, définis par exemple par les normes *ITU E.212, ETSI TS 102 221, 3GPP TS 21.111, TS 31.102,* etc., sont bien connus de l'homme du métier.

Dans le scenario représenté à titre d'exemple nullement limitatif à la figure 1, la carte 10 eUICC du terminal 1 ne comporte initialement qu'un seul profil 11 de provision. Dans ce scenario, on fait l'hypothèse qu'un fabricant 6 de la carte 10 eUICC a passé préalablement un accord avec l'opérateur 210 du réseau 21 de provision afin que le profil 11 de provision permette d'établir une communication entre le terminal 1 et ledit réseau 21 de provision. Notamment, un numéro IMSI, et une clé d'authentification Ki sont attribués et réservés dans des équipements du réseau 21 de provision comme par exemple un HLR (de l'anglais *«Home Location Register»,* une base de données centrale comportant les informations relatives à tout abonné autorisé à utiliser le réseau 21), ou un AuC (de l'anglais « *Authentication Center »,* centre d'authentification souvent associé à un HLR). Le profil 11 de provision comportant ces données est installé par le fabricant 6 sur la carte 10 eUICC lors de la production de la carte 10 eUICC, puis la carte 10 eUICC est ensuite fournie à un fabricant de terminaux 1 qui intègre alors ladite carte 10 eUICC dans le terminal 1.

Dans une étape 1001, le fabricant 6 enregistre auprès de l'entité 5 de gestion d'abonnements l'ensemble des données nécessaires à l'établissement d'une communication entre le terminal 1 et l'entité 5 de gestion d'abonnements à travers le réseau 21 de provision, notamment : le numéro IMSI associé au profil 11 de provision, un identifiant unique de la carte 10 eUICC, dit EID (eUICC-ID), et des données d'authentification permettant de sécuriser la communication entre la carte 10 eUICC du terminal 1 et l'entité 5 de gestion d'abonnements.

Dans une étape 1002, un utilisateur 4 qui a acquis le terminal 1 souscrit un abonnement auprès d'un opérateur 220 d'un réseau 22 opérationnel. L'opérateur 220 fournit alors à l'entité 5 de gestion d'abonnements l'ensemble des données nécessaires pour créer sur la carte 10 eUICC un profil 12 opérationnel permettant au terminal 1 d'accéder au réseau 22 opérationnel.

Dans une étape 1003, l'entité 5 de gestion d'abonnements établit une communication sécurisée avec la carte 10 eUICC du terminal 1 à travers le réseau 21 de provision pour télécharger et activer le profil 12 opérationnel sur la carte 10 eUICC. Comme définit dans les normes GSMA, la communication sécurisée établie entre l'entité 5 de gestion d'abonnements et la carte 10 eUICC peut par exemple être basée sur une session HTTPS (acronyme anglais de « *HyperText Transfer Protocol Secure* ») initiée par un message SMS (acronyme anglais de « *Short Message Service »).*

Dans une étape 1004, la carte 10 eUICC installe le profil 12 opérationnel. Elle désactive ensuite le profil 11 de provision et active le profil 12 opérationnel.

Dans une étape 1005, la carte 10 eUICC est désormais capable de communiquer avec le réseau 22 opérationnel.

Il convient de noter que dans la figure 1, le réseau 21 de provision et le réseau 22 opérationnel sont deux réseaux d'accès distincts du premier système 2 de communication sans fil. Rien n'empêche cependant, dans une variante, que le réseau 21 de provision et le réseau 22 opérationnel soient un seul et même réseau d'accès du premier système 2 de communication sans fil.

Les normes GSMA prévoient que plusieurs profils 11, 12 peuvent être installés sur la carte 10 eUICC. Cependant, un seul profil 11, 12 peut être actif à un instant donné. D'autre part, un profil 12 opérationnel peut jouer le rôle de profil 11 de provision. Ainsi, pour le scenario décrit en référence à la figure 1, suite à l'étape 1005, c'est le profil 12 opérationnel qui jouera le rôle de profil de provision pour une configuration ultérieure éventuelle de la carte 10 eUICC. En revanche, un profil 11 de provision installé à l'origine par un fabricant 6 sur une carte eUICC ne fournit en général que des services très limités, et il ne pourra en conséquent pas jouer le rôle de profil 12 opérationnel. Un fabricant 6 peut également installer un ou plusieurs profils 12 opérationnels sur la carte 10 eUICC dès la production de la carte. Un tel profil 12 opérationnel pourra être activé à distance via un profil 11 de provision lui aussi installé et activé par le fabricant 6 lors de la production de la carte. Alternativement, un profil 12 opérationnel peut aussi être activé dès la production de la carte, et il joue alors le rôle de profil 11 de provision pour des configurations ultérieures éventuelles de la carte 10 eUICC.

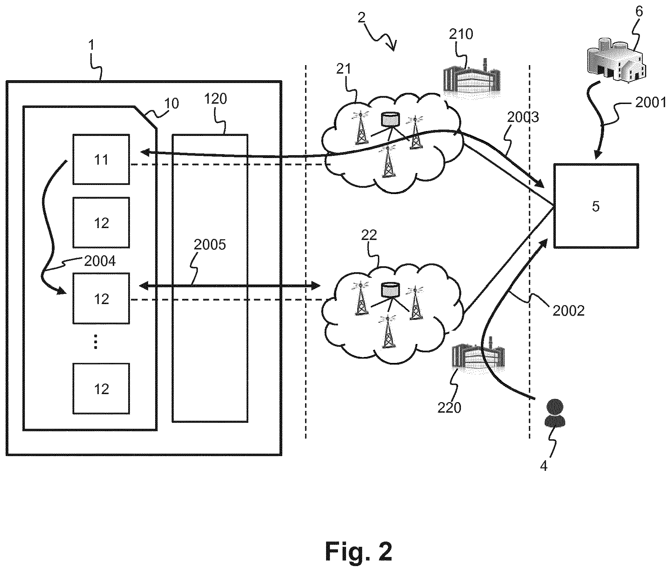

La figure 2 représente schématiquement un deuxième exemple d'une procédure de configuration à distance d'une carte 10 eUICC prévue par les normes GSMA. Plus particulièrement, la figure 2 décrit la procédure par laquelle un profil 12 opérationnel déjà installé sur une carte 10 eUICC peut être activé à distance.

Dans le scenario représenté à titre d'exemple nullement limitatif à la figure 2, la carte 10 eUICC du terminal 1 possède initialement un profil 11 de provision et plusieurs profils 12 opérationnels installés par le fabricant 6 lors de la production de la carte. Initialement, seul le profil 11 de provision est activé. Dans ce scenario, on fait l'hypothèse que le fabricant 6 a préalablement passé pour chaque profil 11, 12 un accord avec l'opérateur 210, 220 du réseau 21, 22 d'accès associé audit profil 11, 12 afin de permettre, sous réserve le cas échéant de l'activation dudit profil 11, 12, l'établissement d'une communication entre le terminal 1 et ledit réseau 21, 22 d'accès.

Pour simplifier la figure, seulement deux réseaux 21, 22 d'accès ont été représentés. Il convient cependant de considérer qu'un réseau d'accès est associé à chaque profil 11, 12 de la carte 10 eUICC.

Dans une étape 2001, le fabricant 6 fournit à l'entité 5 de gestion d'abonnements l'ensemble des données associées aux différents profils 11, 12 installés sur la carte 10 eUICC, ainsi que l'EID et des données d'authentification permettant de sécuriser une communication entre la carte 10 eUICC du terminal 1 et l'entité 5 de gestion d'abonnements.

Dans une étape 2002, l'utilisateur 4 du terminal 1 indique à un opérateur 220 d'un réseau 22 opérationnel qu'il souhaite activer le profil 12 opérationnel associé à ce réseau 22 opérationnel. L'opérateur 220 fournit alors cette information à l'entité 5 de gestion d'abonnements.

Dans une étape 2003, l'entité 5 de gestion d'abonnements établit une communication sécurisée avec la carte 10 eUICC du terminal 1 à travers le réseau 21 de provision pour commander une activation du profil 12 opérationnel souhaité.

Dans une étape 2004, la carte 10 eUICC désactive le profil 11 de provision et active le profil 12 opérationnel désiré.

Dans une étape 2005, la carte 10 eUICC est désormais capable de communiquer avec le réseau 22 opérationnel

Il convient de noter là encore que le profil 11 de provision initial peut également être un profil 12 opérationnel. Aussi, le réseau 21 de provision et le réseau 22 opérationnel peuvent être un seul et même réseau d'accès. Enfin, dans l'exemple décrit en référence à la figure 2, il est considéré que les profils 12 opérationnels présents sur la carte 10 eUICC ont été installés par le fabricant 6 au moment de la production de la carte 10 eUICC. Rien n'empêche cependant, selon un autre exemple, que certains, voire tous ces profils 12 opérationnels aient été installés par une succession de procédures de téléchargement et d'installation similaires à celle décrite en référence à la figure 1.

Les normes GSMA prévoient également qu'un profil 11 de provision de la carte 10 eUICC joue le rôle de profil de secours au cas où la connectivité du terminal 1 avec un profil 12 activé est définitivement perdue, c'est-à-dire pour le cas où le terminal 1 n'arrive plus à établir une communication avec un réseau 21, 22 d'accès associé au profil 12 activé. Dans un tel cas la carte 10 eUICC peut décider de manière autonome de désactiver le profil 12 non fonctionnel et d'activer le profil de secours.

Les procédures de configuration à distance d'une carte 10 eUICC définies par les normes GSMA présentent cependant l'inconvénient majeur pour un opérateur 210 d'un réseau 21 de provision de devoir réserver des ressources particulièrement coûteuses pour que le profil 11 de provision soit fonctionnel. Par exemple, un numéro IMSI, et une clé d'authentification Ki doivent être réservés dans des équipements du réseau 21 de provision comme par exemple un HLR ou un AuC.

Il arrive que ces ressources soient réservées pendant une durée très longue avant d'être effectivement utilisées. Par exemple, pour le scenario décrit en référence à la figure 1, le numéro IMSI et la clé Ki du profil 11 de provision installé et activé par le fabricant 6 de la carte 10 eUICC sont réservés par le réseau 21 de provision dès la production de ladite carte 10 eUICC, c'est-à-dire à une date qui peut être largement antérieure à la date à laquelle le terminal 1 qui intègre ladite carte 10 eUICC est acquis et mis en service par l'utilisateur 4.

Une fois que le profil 11 de provision a été utilisé pour télécharger et/ou activer un profil 12 opérationnel, il est envisageable de libérer les ressources associées au profil 11 de provision, puisque le nouveau profil 12 opérationnel peut à son tour jouer le rôle de profil de provision. Cependant, il peut être avantageux de maintenir un profil de secours pendant tout le cycle de vie du terminal 1, pour pallier le cas où la connectivité avec le nouveau profil 12 opérationnel ne serait plus fonctionnelle.

Or, un opérateur 210 d'un réseau 21 de provision du premier système 2 de communication sans fil doit généralement payer une licence pour réserver des ressources telles qu'un numéro IMSI ou une clé Ki dans des équipements du type HLR ou AuC. Il peut donc s'avérer très coûteux pour un opérateur 210 d'un réseau 21 de provision de réserver ces ressources de manière permanente alors qu'elles ne sont utilisées que pour des procédures courtes et dans des situations peu fréquentes (par exemple pour une première configuration de la carte 10 eUICC, ou une perte accidentelle de connectivité avec le profil courant).

D'autre part, l'opérateur 210 d'un réseau 21 de provision ne peut pas forcément présupposer de l'endroit où sera localisé un terminal 1 intégrant une carte 10 eUICC au moment où il aura besoin de configurer à distance ladite carte 10 eUICC. Autrement dit, il doit prévoir une couverture pour son réseau 21 de provision aussi large que possible afin de permettre l'établissement d'une communication entre le terminal 1 et le réseau 21 de provision quelle que soit la position géographique du terminal 1 au moment où la carte 10 eUICC du terminal 1 doit être configurée à distance. Cela implique par exemple que l'opérateur 210 du réseau 21 de provision passe de nombreux accords d'itinérance avec d'autres réseaux d'accès, or de tels accords sont particulièrement coûteux et peuvent en outre évoluer avec le temps.

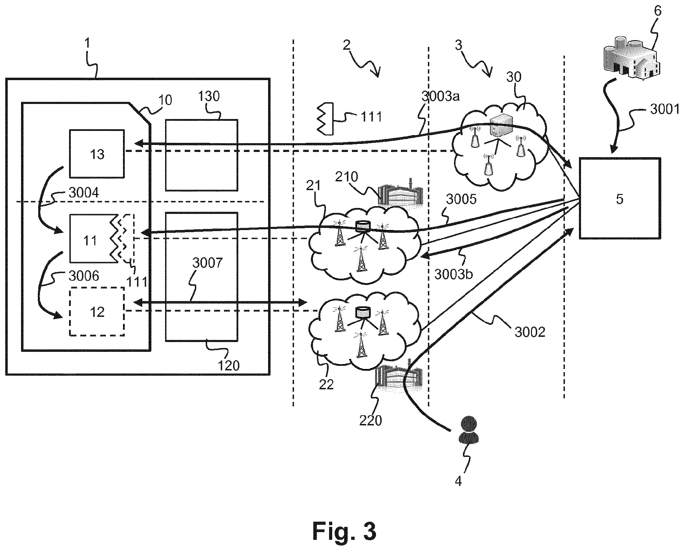

La figure 3 illustre schématiquement comment la présente invention résout les inconvénients décrits ci-avant.

La figure 3 représente notamment un terminal 1 pour lequel on considère, à titre d'exemple nullement limitatif, qu'il s'agit d'un terminal de type IoT ou M2M. Le terminal 1 comporte une carte 10 eUICC qui comporte un profil 11 de provision qui a la particularité d'être incomplet. On entend par là qu'une ou plusieurs données 111 manquantes indispensables à l'établissement d'une communication entre le terminal 1 et un réseau 21 de provision ne sont pas définies par défaut dans le profil 11 de provision. Autrement dit, les données manquantes ne sont pas présentes dans le profil 11 de provision initialement sauvegardé sur la carte eUICC par le fabricant 6 lors de la production de la carte eUICC.

Dans des modes particuliers de réalisation, les données 111 manquantes au profil 11 de provision peuvent comporter par exemple un ou plusieurs des éléments suivants:
- l'indication que le profil 11 est actif,
- tout ou partie d'un numéro IMSI permettant d'identifier de manière unique le profil 11 de provision auprès du réseau 21 de provision,
- un identifiant d'un algorithme d'authentification et/ou une clé Ki d'authentification du profil 11 de provision,
- un identifiant d'un réseau d'accès du premier 2 système de communication sans fil, dit réseau d'itinérance, lié au réseau 21 de provision.

La carte 10 eUICC comporte en outre un profil 13 d'assistance comportant des applications et des données permettant l'accès dudit terminal 1 à un réseau 30 d'accès d'un deuxième système 3 de communication sans fil, dit réseau 30 d'assistance. Le deuxième système 3 de communication sans fil est distinct du premier système 2 de communication sans fil. Dans la suite de la description, on se place à titre d'exemple et de manière nullement limitative dans le cas où ledit deuxième système 3 de communication sans fil est un réseau étendu de communication sans fil bas débit et basse consommation (en anglais LPWAN pour « *Low Power Wide Area Network* ») de type à bande ultra étroite. Par « bande ultra étroite » (« *Ultra Narrow Band »* ou UNB dans la littérature anglo-saxonne), on entend que le spectre fréquentiel instantané des signaux radioélectriques émis par les terminaux est de largeur fréquentielle inférieure à deux kilohertz, voire inférieure à un kilohertz. De tels systèmes de communication sans fil UNB sont particulièrement adaptés pour des applications du type M2M ou loT.

Dans un tel système 3 de communication sans fil, les échanges de données sont essentiellement monodirectionnels, en l'occurrence sur un lien montant entre un terminal 1 et le réseau 30 d'assistance. Les terminaux 1 d'un tel système 3 de communication émettent généralement des messages qui sont collectés par des stations de base 31 du réseau 30 d'accès, sans avoir à s'associer préalablement à une ou plusieurs stations de base 31 du réseau 30 d'accès. En d'autres termes, les messages émis par un terminal 1 ne sont pas destinés à une station de base 31 spécifique du réseau 30 d'accès, et le terminal 1 émet ses messages en supposant qu'ils pourront être reçus par au moins une station de base 31. De telles dispositions sont avantageuses en ce que le terminal 1 n'a pas besoin de réaliser des mesures régulières, gourmandes notamment d'un point de vue consommation électrique, pour déterminer la station de base 31 la plus appropriée pour recevoir ses messages. La complexité repose sur le réseau 30 d'accès, qui doit être capable de recevoir des messages pouvant être émis à des instants arbitraires, et sur des fréquences centrales arbitraires à l'intérieur d'une bande fréquentielle de multiplexage des différents terminaux 1.

Le coût pour maintenir une connectivité entre un terminal 1 et le réseau 30 d'accès d'un tel système 3 de communication sans fil est généralement très inférieur au coût pour maintenir une connectivité entre un terminal 1 et un réseau 21, 22 d'accès du premier système 2 de communication sans fil du type réseau cellulaire de téléphonie mobile. En outre, un réseau 30 d'accès d'un tel système 3 de communication sans fil peut proposer à moindre coût une couverture géographique très large couvrant plusieurs pays voire plusieurs continents.

Comme le terminal 1 décrit en référence à la figure 1, le terminal 1 représenté à la figure 3 comporte un module 120 de communication configuré pour envoyer et recevoir des messages échangés entre le terminal 1 et un réseau d'accès 21, 22 du premier système 2 de communication sans fil. En outre, le terminal 1 représenté à la figure 3 comporte un module 130 de communication qui inclut, de manière conventionnelle, un ensemble de moyens matériels et/ou logiciels considérés comme connus de l'homme de l'art, pour envoyer et recevoir des messages échangés entre le terminal 1 et le réseau 30 d'assistance du deuxième système 3 de communication sans fil.

En d'autres termes, le module 120 de communication permet, à l'aide d'un profil 11 de provision ou d'un profil 12 opérationnel, d'établir des communications entre le terminal 1 et un réseau 21 de provision ou un réseau 22 opérationnel du premier système 2 de communication sans fil, tandis que le module 130 de communication permet, à l'aide d'un profil 13 d'assistance, d'établir des communications entre le terminal 1 et un réseau 30 d'assistance du deuxième système 3 de communication sans fil.

Le profil 13 d'assistance comporte des applications et des données permettant l'accès dudit terminal 1 au réseau 30 d'assistance. Il s'agit par exemple d'un identifiant unique du terminal 1 ou du module 130 de communication auprès du réseau 30 d'assistance, un algorithme et une clé secrète permettant l'authentification du terminal 1 auprès du réseau 130 d'assistance, etc. Il convient de noter que, selon une variante, ces données peuvent se trouver en dehors de la carte 10 eUICC, par exemple dans le module 130 de communication. Dans une telle variante, le module 130 de communication peut néanmoins faire appel à des fonctions de chiffrement ou de déchiffrement proposées de manière conventionnelle par la carte 10 eUICC pour chiffrer ou déchiffrer des données qui doivent être échangées de manière sécurisée entre la carte 10 eUICC et l'entité 5 de gestion d'abonnement.

Le scenario décrit à la figure 3 décrit à titre d'exemple nullement limitatif la procédure par laquelle un nouveau profil 12 opérationnel peut être téléchargé, installé et activé à distance sur une carte 10 eUICC selon l'invention.

Dans ce scenario, on fait l'hypothèse que le fabricant 6 de la carte 10 eUICC a passé préalablement un accord avec un opérateur du réseau 30 d'assistance afin que le profil 13 d'assistance permette d'établir une communication entre le terminal 1 et le réseau 30 d'assistance. Lors de la production de la carte 10 eUICC, le fabricant 6 installe le profil 13 d'assistance sur la carte 10 eUICC, ainsi qu'un profil 11 de provision incomplet, puis la carte 10 eUICC est ensuite fournie à un fabricant de terminaux 1 qui intègre alors ladite carte 10 eUICC dans le terminal 1. Un accord préalable peut être effectué entre le fabricant 6 de la carte 10 eUICC et un opérateur 210 d'un réseau 21 de provision associé au profil 11 de provision incomplet, cependant, contrairement aux scenarios de l'art antérieur décrits en référence aux figures 1 et 2, certaines ressources comme par exemple un numéro IMSI ou une clé Ki ne sont pas encore attribuées au profil 11 de provision ni réservées dans des équipements du réseau 21 de provision.

Dans une étape 3001, le fabricant 6 fournit à l'entité 5 de gestion les données du profil 13 d'assistance et les données de la carte 10 eUICC (par exemple l'EID et/ou une clé de sécurité) nécessaires pour établir une communication sécurisée entre la carte 10 eUICC et l'entité 5 de gestion d'abonnements à travers le réseau 30 d'assistance.

Dans une étape 3002, un utilisateur 4 qui a acquis le terminal 1 souscrit un abonnement auprès d'un opérateur 220 d'un réseau 22 opérationnel. L'opérateur 220 fournit alors à l'entité 5 de gestion d'abonnements l'ensemble des données nécessaires pour créer sur la carte 10 eUICC un profil 12 opérationnel permettant au terminal 1 d'accéder au réseau 22 opérationnel.

Dans une étape 3003a, une communication est établie, à l'aide du profil 13 d'assistance et du module 130 de communication, entre la carte 10 eUICC et l'entité 5 de gestion d'abonnements à travers le réseau 30 d'assistance afin d'obtenir les données 111 manquantes au profil 11 de provision incomplet. Par exemple, le terminal 1 peut envoyer une requête vers le réseau 30 d'assistance de manière récurrente jusqu'à ce qu'une connectivité soit finalement disponible entre le terminal 1 et le réseau 21 de provision.

Il convient de noter que la communication établie à l'étape 3003a entre la carte 10 eUICC et l'entité 5 de gestion d'abonnements peut être sécurisé par des protocoles de sécurité préconisés par les normes GSMA similaires à ceux utilisés pour sécuriser la communication établie entre la carte 10 eUICC et l'entité 5 de gestion d'abonnements décrite en référence à l'étape 1003 de la figure 1.

Les données 111 manquantes au profil 11 de provision de la carte 10 eUICC du terminal 1 sont alors déterminées par l'entité 5 de gestion d'abonnements, éventuellement avec l'aide du réseau 21 de provision. Dans une étape 3003b, avant de transmettre les données 111 manquantes au terminal 1 via le réseau 30 d'assistance, l'entité 5 de gestion d'abonnement les communique à l'opérateur 210 du réseau 21 de provision afin que les ressources réseau associées soient réservées dans les équipements appropriés.

Selon un premier exemple, les données 111 manquantes au profil 11 de provision incluent un numéro IMSI et une clé Ki. Ces éléments sont alors attribués par l'entité 5 de gestion d'abonnements pendant l'étape 3003a (par exemple l'entité 5 de gestion d'abonnements possède un ensemble de numéros IMSI disponibles associés à l'opérateur 210, et elle en choisit un dans cet ensemble), puis ils sont réservés dans les équipements HLR et AuC du réseau 21 de provision pendant l'étape 3003b.

Selon un deuxième exemple, le profil 11 de provision incomplet comporte un IMSI et une clé Ki, mais il n'est pas actif. La donnée 111 manquante correspond alors à l'indication que le profil 11 de provision est actif. Dans cet exemple, le numéro IMSI et la clé Ki sont attribués à l'avance par l'opérateur 210, mais ils ne sont réservés dans le HLR et l'AuC qu'à l'étape 3003b, c'est-à-dire au moment où le profil 11 de provision devient actif. De telles dispositions permettent de réduire les coûts de licence de l'opérateur 210 auprès des vendeurs des équipements HLR et AuC en limitant la durée pendant laquelle le numéro IMSI et la clé Ki sont réservés dans ces équipements.

Dans une étape 3004, la carte 10 eUICC met à jour le profil 11 de provision incomplet avec les données 111 obtenues. Le profil 11 de provision permet désormais au terminal 1 de communiquer avec le réseau 21 de provision. Une procédure de configuration à distance de la carte 10 eUICC définie selon les normes GSMA peut alors se dérouler, comme décrit en référence à la figure 1.

Dans une étape 3005, l'entité 5 de gestion d'abonnements établit une communication sécurisée avec la carte 10 eUICC du terminal 1 à travers le réseau 21 de provision pour télécharger et activer le profil 12 opérationnel sur la carte 10 eUICC.

Dans une étape 3006, la carte 10 eUICC installe le profil 12 opérationnel. Elle désactive ensuite le profil 11 de provision et active le profil 12 opérationnel.

Dans une étape 3007, la carte 10 eUICC est désormais capable de communiquer avec le réseau 22 opérationnel.

A partir de l'étape 3007, c'est le profil 12 opérationnel qui joue le rôle de profil de provision pour une configuration ultérieure éventuelle de la carte 10 eUICC. Les ressources réseau correspondant aux données 111 qui ont permis de compléter le profil 11 de provision (par exemple le numéro IMSI et la clé Ki) peuvent alors être libérées pour réduire les coûts de licence de l'opérateur 210 auprès des vendeurs des équipements HLR et AuC. Les données 111 sont alors effacées du profil 11 de provision de la carte 10 eUICC. Il redevient ainsi un profil 11 de provision incomplet. Un tel profil peut notamment jouer le rôle de profil de secours dans le cas où la connectivité entre le terminal 1 et le réseau 22 opérationnel est interrompue (par exemple si l'abonnement associé est résilié). Dans un tel cas, un scenario identique à celui décrit en référence à la figure 3 est déroulé pour configurer à distance la carte 10 eUICC, tout comme s'il s'agissait d'une première configuration.

Dans l'exemple considéré, le deuxième système 3 de communication sans fil est un réseau bas débit. Il convient donc de limiter la quantité d'information à transmettre sur le réseau 30 d'assistance pour fournir les données 111 manquantes. Différentes solutions sont envisageables pour atteindre cet objectif.

Dans des modes particuliers de réalisation, une partie du numéro IMSI permettant d'identifier l'opérateur 210 (la partie MCC/MNC « *Mobile Country Code* /*Mobile Network Code* » encodée sous la forme de 5 ou 6 chiffres) est préconfigurée dans le profil 11 incomplet, et seule une partie correspondant à un identifiant d'abonné (le numéro MSIN « *Mobile Subscriber Identification Number »* pouvant compter jusqu'à 10 chiffres) est manquante.

Dans des modes particuliers de réalisation, un ensemble de clés d'authentification Ki sont préconfigurées dans le profil 11 de provision incomplet et sont utilisées successivement à chaque nouvelle procédure de configuration de la carte 10 eUICC. Par exemple, il est possible d'associer chaque clé Ki de cet ensemble à un index afin de n'avoir à transmettre dans l'étape 3005 que la valeur de l'index (qui peut par exemple être encodé sur seulement 5 bits si ledit ensemble compte 32 éléments) pour identifier la clé Ki, et non la clé Ki entière (qui est généralement encodée sur 128 bits).

De la même manière, il est possible de préconfigurer un ensemble d'algorithmes d'authentification susceptibles d'être utilisés, et de fournir parmi les données 111 un index indiquant quel algorithme doit être utilisé.

Dans des modes particuliers de réalisation, le profil 11 de provision peut être quasiment vierge, par exemple si un opérateur 210 n'est pas a priori déterminé pour la première configuration de la carte 10 eUICC. Dans ce cas, le choix d'un opérateur 210 particulier peut être déterminé pendant l'étape 3003b. De telles dispositions permettent notamment de simplifier la production de cartes 10 eUICC pour un fabricant 6, car dans ce cas toutes les cartes 10 eUICC sont identiques.

Dans des modes particuliers de réalisation, l'entité 5 de gestion d'abonnements utilise une information sur la position géographique courante du terminal 1 pour déterminer la valeur d'une au moins des données manquantes 111. Par exemple, le choix d'un réseau d'itinérance lié au réseau 21 de provision à utiliser préférentiellement peut être déterminé en fonction de la position géographique courante du terminal 1. De telles dispositions peuvent notamment permettre de choisir un réseau d'itinérance pour lequel les accords d'itinérance vers le réseau 21 de provision sont les plus avantageux en termes de coût.

L'information sur la position géographique du terminal 1 peut par exemple correspondre aux coordonnées géographiques (longitude, latitude) dudit terminal 1, ou bien, de manière moins précise, à l'identification d'une région ou d'un pays dans lequel se trouve le terminal 1.

Selon un premier exemple, l'information sur la position géographique courante peut être déterminée par le terminal 1 lui-même. Par exemple, le terminal 1 peut intégrer un récepteur d'un système de positionnement par satellite (en anglais GNSS pour « *Global Navigation Satellite System* ») qui permet de déterminer les coordonnées géographiques courantes (longitude, latitude). Dans une variante, l'information sur la position géographique du terminal 1 peut être déterminée à l'aide du module 120 de communication. En effet, le module 120 de communication peut identifier les réseaux d'accès environnants du premier système 2 de communication sans fil. L'identifiant MCC/MNC d'un réseau d'accès est en effet diffusé sur des voies balises émises par les stations de base dudit réseau d'accès. A partir d'une telle information, il est possible de déterminer le pays (ou au moins un ensemble limité de pays candidats) dans lequel se trouve le terminal 1.

Selon un deuxième exemple, l'information sur la position géographique courante du terminal 1 peut être déterminée par le réseau 30 d'assistance, par exemple grâce à des méthodes de trilatération ou des méthodes d'apprentissage automatique basées sur des niveaux de puissance radio reçus par les stations de base 31 du réseau 30 d'assistance pour le terminal 1.

L'information sur la position géographique courante du terminal 1 est par exemple transmise par le réseau 30 d'assistance à l'entité 5 de gestion d'abonnements pendant l'étape 3003a (dans le cas où elle est initialement déterminée par le terminal 1, l'information sur la position géographique courante du terminal 1 est préalablement transmise au réseau 30 d'assistance par le terminal 1).

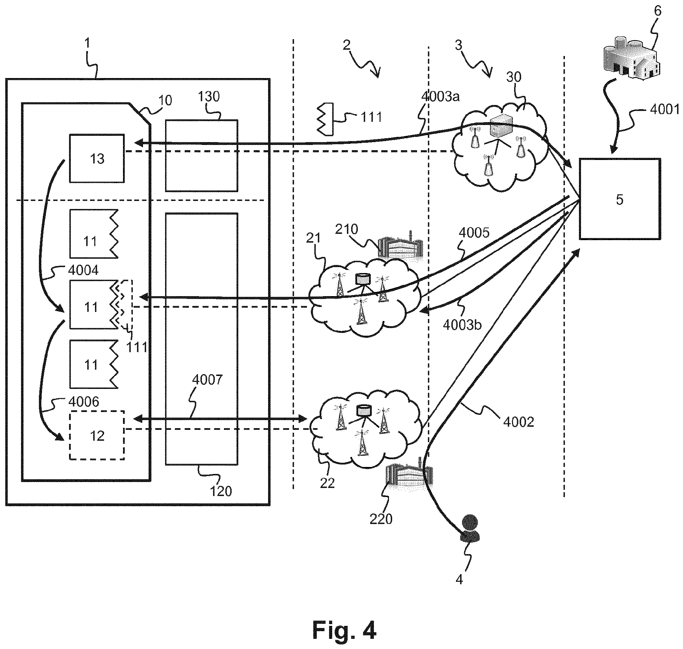

La figure 4 représente un mode particulier de réalisation de la carte 10 eUICC pour lequel plusieurs profils 11 de provision incomplets sont initialement installés par le fabricant 6. Chaque profil est par exemple associé à un opérateur 210 d'un réseau 21 de provision différent (il convient de noter qu'ils n'ont pas tous été représentés sur la figure 4 dans un souci de simplification de la figure). Les réseaux 21 de provision associés aux profils 11 de provision peuvent par exemple proposer des couvertures radio dans des pays différents. Le profil 11 de provision à utiliser, par exemple pour une première configuration à distance ou bien pour une configuration dans la cadre d'une procédure de secours, est alors choisi de manière avantageuse par l'entité 5 de gestion d'abonnements, par exemple en fonction de la position géographique courante du terminal 1 et/ou des tarifs d'itinérance en vigueur.

Les étapes représentées sur la figure 4 sont très similaires à celles décrites ci-avant en référence à la figure 3.

Dans une étape 4001, le fabricant 6 enregistre auprès de l'entité 5 de gestion les données de la carte 10 eUICC et du profil 13 d'assistance nécessaires pour établir une communication sécurisée entre la carte 10 eUICC et l'entité 5 de gestion d'abonnements à travers le réseau 30 d'assistance.

Dans une étape 4002, un utilisateur 4 qui a acquis le terminal 1 souscrit un abonnement auprès d'un opérateur 220 d'un réseau 22 opérationnel. L'opérateur 220 fournit alors à l'entité 5 de gestion d'abonnements l'ensemble des données nécessaires pour créer sur la carte 10 eUICC un profil 12 opérationnel permettant au terminal 1 d'accéder au réseau 22 opérationnel.

Dans une étape 4003a, une communication est établie, à l'aide du profil 13 d'assistance et du module 130 de communication, entre la carte 10 eUICC et l'entité 5 de gestion d'abonnements à travers le réseau 30 d'assistance afin d'établir un profil 11 de provision fonctionnel. Un identifiant du profil 11 de provision à utiliser ainsi que les données 111 manquantes audit profil 11 de provision sont déterminés par l'entité 5 de gestion d'abonnements, éventuellement avec l'aide du réseau 21 de provision choisi.

Dans une étape 4003b, avant de transmettre l'identifiant du profil 11 de provision à utiliser et les données 111 manquantes au terminal 1 via le réseau 30 d'assistance, l'entité 5 de gestion d'abonnement s'assure auprès de l'opérateur 210 du réseau 21 de provision que les ressources réseau associées sont réservées dans les équipements appropriés (par exemple le HLR et l'AuC).

Dans une étape 4004, la carte 10 eUICC détermine le profil 11 de provision à utiliser à partir de l'identifiant obtenu, puis elle le met à jour avec les données 111 obtenues et l'active. Le profil 11 de provision permet désormais au terminal 1 de communiquer avec le réseau 21 de provision. Une procédure de configuration à distance de la carte 10 eUICC définie selon les normes GSMA peut alors se dérouler, comme décrit en référence à la figure 1.

Dans une étape 4005, l'entité 5 de gestion d'abonnements établit une communication sécurisée avec la carte 10 eUICC du terminal 1 à travers le réseau 21 de provision pour télécharger le profil 12 opérationnel sur la carte 10 eUICC.

Dans une étape 4006, la carte 10 eUICC installe le profil 12 opérationnel. Elle désactive alors le profil 11 de provision et active le profil 12 opérationnel.

Dans une étape 4007, la carte 10 eUICC est désormais capable de communiquer avec le réseau 22 opérationnel.

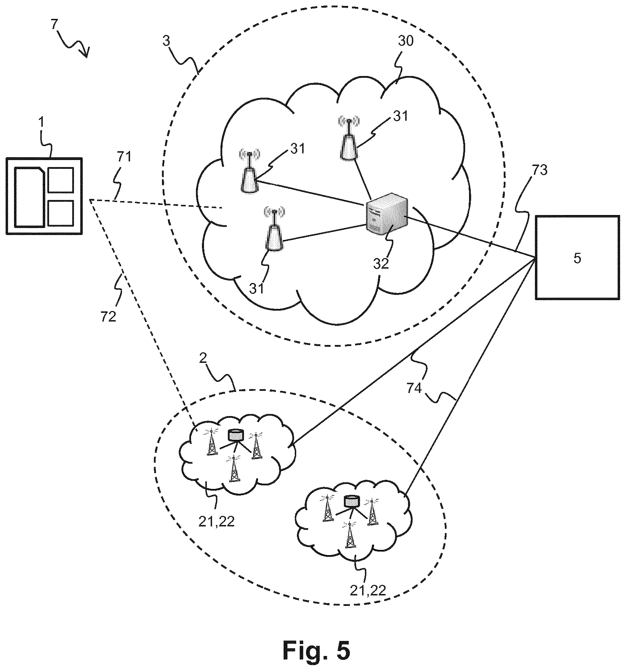

La figure 5 représente schématiquement un système 7 comportant l'ensemble des éléments impliqués dans la configuration à distance d'une carte 10 eUICC d'un terminal 1 selon l'invention.

Comme décrit précédemment en référence aux figures 3 et 4, le terminal 1 comporte une carte 10 eUICC et il est adapté pour communiquer d'une part avec un réseau 21, 22 d'accès du premier système 2 de communication sans fil, et d'autre part avec le réseau 30 d'assistance du deuxième système 3 de communication sans fil. Le réseau 30 d'assistance comporte des stations de base 31 reliées à un serveur 32. Chaque réseau 30, 21, 22 d'accès est adapté pour communiquer avec une entité 5 de gestion d'abonnements. Une telle entité 5 de gestion d'abonnements comprend notamment un SM-DP et un SM-SR tels que définis par les normes GSMA.

Les interfaces suivantes sont considérées comme connues de l'homme du métier :
- interface 72 de communication radio entre le terminal 1 et un réseau d'accès 21, 22 du premier système 2 de communication sans fil (cette interface est par exemple largement décrite par les normes 3GPP pour les réseaux cellulaires de téléphonie mobile),
- interface 71 de communication radio entre le terminal 1 et le réseau 30 d'assistance du deuxième système 3 de communication sans fil (de tels systèmes de communication sans fil pour objets M2M ou IoT sont déjà déployés dans de nombreux pays),
- interface 74 de communication entre un réseau 21, 22 d'accès et l'entité 5 de gestion d'abonnements (les interfaces avec les entités SM-SR et SM-DP sont définies par les normes GSMA),
- interface entre le module 120 de communication du terminal 1 et la carte 10 eUICC (cette interface est définie par les normes ETSI et GSMA).

L'interface 73 de communication entre le serveur 32 du réseau 30 d'assistance et l'entité 5 de gestion d'abonnements peut utiliser des protocoles similaires à ceux utilisés par l'interface 74 de communication entre un réseau 21, 22 d'accès et l'entité 5 de gestion d'abonnements.

De la même manière, l'interface entre le module 130 de communication du terminal 1 et la carte 10 eUICC peut utiliser des protocoles similaires à ceux utilisés pour l'interface entre le module 120 de communication du terminal 1 et la carte 10 eUICC.

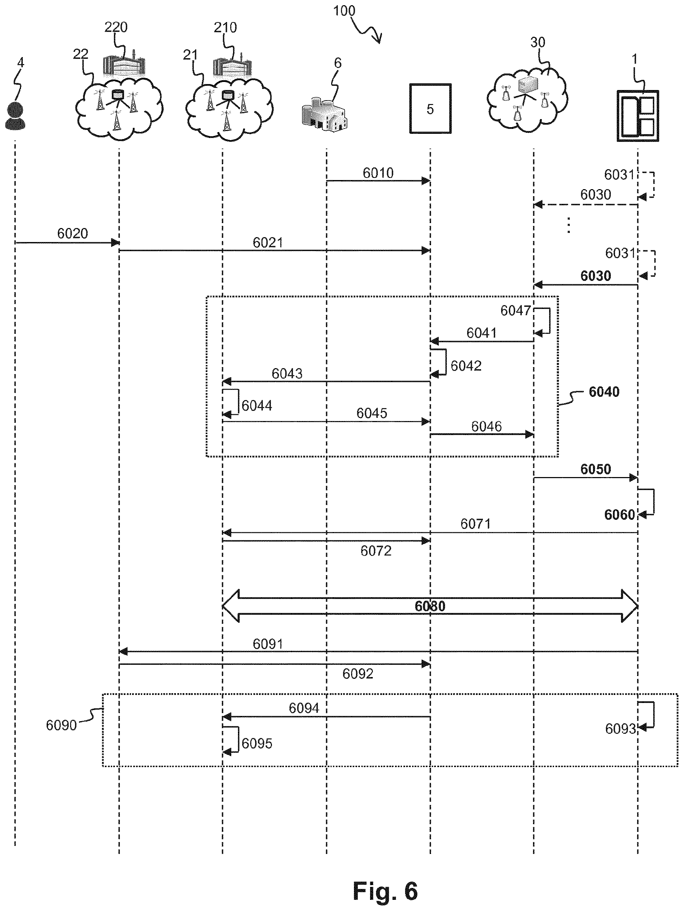

La figure 6 représente un diagramme de séquence illustrant en détail un procédé 100 d'assistance mis en œuvre par le système 7 pour configurer à distance une carte 10 eUICC d'un terminal 1. Un tel procédé 100 est notamment applicable pour la première configuration à distance de la carte 10 eUICC du terminal 1 ou bien pour une configuration suite à une perte de connectivité du terminal 1 (procédure de secours).

Les principales étapes du procédé 100 d'assistance sont définies ci-après.

Dans une première étape 6010, le fabricant 6 de la carte 10 eUICC fournit à l'entité 5 de gestion les données de la carte 10 eUICC et du profil 13 d'assistance nécessaires pour établir une communication sécurisée entre la carte 10 eUICC et l'entité 5 de gestion d'abonnements à travers le réseau 30 d'assistance.

Dans une étape 6020, l'utilisateur 4 possesseur du terminal 1 souscrit un abonnement auprès d'un opérateur 220 d'un réseau 22 opérationnel.

Dans une étape 6021, l'opérateur 220 fournit alors à l'entité 5 de gestion d'abonnements l'ensemble des données nécessaires pour créer sur la carte 10 eUICC un profil 12 opérationnel permettant au terminal 1 d'accéder au réseau 22 opérationnel.

Dans l'exemple considéré représenté à la figure 6, lors de sa première mise en service, ou bien si une perte de connectivité avec le premier système 2 de communication sans fil est détectée, le terminal 1 envoie de manière récurrente au réseau 30 d'accès une requête 6030 dans le but de compléter un profil 11 de provision de la carte 10 eUICC. Cette requête 6030 peut être réitérée de manière régulière, par exemple plusieurs fois par jour, jusqu'à ce qu'un profil 11 de provision soit fonctionnel dans la carte 10 eUICC, c'est-à-dire jusqu'à ce qu'un profil 11 de provision de ladite carte 10 eUICC permette d'établir une communication avec un réseau 21 de provision du premier système 2 de communication sans fil. Dans une variante, si le réseau 30 d'assistance est capable de communiquer sur un lien descendant avec le terminal 1, suite à l'étape 6021, une requête peut être émise par l'entité 5 de gestion d'abonnements au terminal 1 à travers le réseau 30 d'assistance.

De manière optionnelle, dans une étape 6031, le terminal 1 peut déterminer une information sur sa position géographique courante à transmettre dans la requête 6030. Comme indiqué précédemment, cette information sur la position géographique courante du terminal peut par exemple correspondre à des coordonnées géographiques (longitude, latitude) obtenues d'un récepteur d'un système de positionnement par satellite intégré au terminal 1, ou bien à l'identification d'une région ou d'un pays dans lequel se trouve le terminal 1 obtenue à partir d'un ou plusieurs identifiants des réseaux d'accès environnants diffusés sur des voies balises.

Dans une étape 6047, le réseau 30 d'assistance authentifie le terminal 1 à l'aide par exemple d'une clé d'authentification identique à celle contenue dans le profil 13 d'assistance de la carte 10 eUICC du terminal 1. Il identifie ensuite l'entité 5 de gestion d'abonnements qui gère la carte 10 eUICC. On considère par exemple ici qu'une relation bijective entre un identifiant unique (EID) de la carte 10 eUICC transmis dans la requête 6030 et l'entité 5 de gestion d'abonnement gérant ladite carte 10 eUICC a été préalablement enregistré dans le serveur 32 du réseau 30 d'assistance suite à un accord passé entre le fabricant 6 de la carte 10 eUICC et l'opérateur du réseau 30 d'assistance.

De manière optionnelle, l'étape 6047 peut également comporter la détermination par le réseau 30 d'assistance d'une information sur la position géographique courante du terminal 1, par exemple si cette information ne peut pas être déterminée par le terminal 1 lui-même. Comme indiqué précédemment, cette information sur la position géographique courante du terminal 1 peut par exemple être déterminée au niveau du serveur 32 par des procédés de trilatération ou des algorithmes d'apprentissage automatique basés sur des niveaux de puissance radio reçus par les stations de base 31 du réseau 30 d'assistance pour le terminal 1.

Dans une étape 6041, le réseau 30 d'assistance transfère la requête, accompagnée le cas échéant de l'information sur la position géographique du terminal 1, à l'entité 5 de gestion d'abonnements.

Dans une étape 6042, l'entité 5 de gestion d'abonnements détermine, en accord avec l'opérateur 210 du réseau 21 de provision et éventuellement à l'aide de l'information sur la position géographique du terminal 1, le profil 11 de provision de la carte 10 eUICC à utiliser et/ou les données 111 manquantes au profil 11 de provision. Puis, dans une étape 6043, l'entité 5 de gestion d'abonnements communique ces données 111 au réseau 21 de provision afin que ce dernier les réserve, dans une étape 6044, auprès des équipements appropriés (par exemple le numéro IMSI est réservé dans un HLR, et la clé Ki est réservée dans un AuC), puis dans une étape 6045, une confirmation est émise à l'entité 5 de gestion d'abonnements.

Dans une étape 6046, l'identifiant du profil 11 de provision à utiliser et/ou les données 111 manquantes du profil 11 de provision sont envoyées au serveur 32 du réseau 30 d'assistance.

Ainsi, une étape globale 6040 comportant les sous-étapes 6041 à 6047 correspond à l'obtention d'un identifiant du profil 11 de provision à utiliser et/ou des données 111 manquantes du profil 11 de provision par le réseau 30 d'assistance auprès de l'entité 5 de gestion d'abonnements.

Dans une étape 6050, les informations ainsi obtenues sont envoyées au terminal 1 sur le réseau 30 d'assistance.

Dans une étape 6060, le profil 11 de provision à utiliser est mis à jour par la carte 10 eUICC à partir des informations obtenues. Cette étape 6060 peut notamment inclure, selon les exemples précédemment décrits, une détermination du profil 11 de provision à utiliser à partir de l'identifiant obtenu, une affectation de la valeur de tout ou partie d'un numéro IMSI au profil 11 de provision, une affectation d'une clé Ki ou bien une détermination, à l'aide d'un identifiant obtenu, d'une clé Ki à utiliser parmi un ensemble de clés Ki préconfigurées, une affectation de la valeur d'un identifiant d'un réseau préféré d'itinérance, etc.

A partir de là, le profil 11 de provision permet d'établir une communication entre le terminal 1 et le réseau 21 de provision. Dans une étape 6071, la carte 10 eUICC envoie une confirmation à travers le réseau 21 de provision à destination de l'entité 5 de gestion d'abonnements que son profil 11 de provision est fonctionnel. Cette confirmation est alors transmise par le réseau 21 de provision à l'entité 5 de gestion d'abonnements dans une étape 6072. Il convient de noter que dans une variante, cette confirmation peut également être émise à travers le réseau 30 d'assistance.

Une étape 6080 de configuration à distance de la carte 10 eUICC, telle que définie par les normes GSMA, peut alors avoir lieu à travers le réseau 21 de provision. Une telle étape 6080 peut notamment comporter, de manière conventionnelle, des étapes d'authentification de la carte 10 eUICC auprès de l'entité 5 de gestion d'abonnements, d'établissement d'un lien de communication sécurisé entre l'entité 5 de gestion d'abonnement et la carte 10 eUICC par des procédures d'établissement de clés de sécurité, de téléchargement et/ou d'activation d'un profil 12 opérationnel sur la carte 10 eUICC, etc.

Une fois que le profil 12 opérationnel est fonctionnel et actif sur la carte 10 eUICC, une confirmation que la procédure de configuration à distance effectuée à l'étape 6080 s'est bien passée est émise par le terminal 1 à l'entité 5 de gestion d'abonnements à travers le réseau 22 opérationnel (étapes 6091 et 6092).

Le profil 12 opérationnel joue désormais le rôle de profil de provision. Les ressources qui avaient été réservées pour que le profil 11 de provision soit fonctionnel peuvent donc être libérées dans une étape 6090 qui comporte les étapes 6093 à 6095 décrites ci-après.

Dans une étape 6093, la carte 10 eUICC efface les données 111 du profil 11 de provision.

Dans une étape 6094, le réseau 21 de provision est quant à lui prévenu par l'entité 5 de gestion d'abonnements qu'il peut libérer les ressources réseau qui avaient été réservées pour que le profil 11 de provision soit fonctionnel. Par exemple, dans une étape 6095, le numéro IMSI qui avait été attribué au profil 11 de provision est libéré dans le HLR, et il en va de même pour la clé Ki dans l'AuC.

En cas de perte accidentelle de connectivité entre le terminal 1 et le réseau 22 opérationnel, un procédé de secours consistant à rétablir un profil 11 de provision peut avoir lieu. Un tel procédé est alors similaire au procédé 100 décrit en référence à la figure 6.

Il convient de noter que, selon un autre exemple, un profil 11 de provision incomplet peut éventuellement aussi être un profil 12 opérationnel, et l'utilisateur 4 peut simplement chercher à activer ce profil. Dans ce cas les étapes 6080 et suivantes ne sont pas nécessairement effectuées.

La description ci-avant illustre clairement que, par ses différentes caractéristiques et leurs avantages, la présente invention atteint les objectifs fixés.

En particulier, le fait de pouvoir fournir certaines données manquantes à un profil 11 de provision au moment où la configuration de la carte 10 eUICC doit avoir lieu permet d'éviter à un opérateur 210 d'un réseau 21 de provision d'avoir à réserver certaines ressources (comme par exemple un numéro IMSI ou une clé d'authentification Ki) dans des équipements de son réseau (comme par exemple un HLR ou un AuC) pendant des périodes où elles ne sont pas utiles. Cela permet ainsi de réduire des coûts relatifs à la réservation de ces ressources.

En outre, l'invention permet de choisir un éventuel réseau d'itinérance vers le réseau 21 de provision pour lequel les accords d'itinérance sont les plus avantageux en termes de coût au moment où la configuration à distance de la carte 10 eUICC a lieu. Ce choix peut être fait en fonction de la position géographique du terminal si cette information est disponible.

Similairement, l'invention permet de choisir un profil 11 particulier parmi plusieurs profils 11 de provision installés sur la carte 10 eUICC en fonction de la position géographique du terminal au moment où la configuration à distance de la carte 10 eUICC a lieu. Ainsi, le profil le plus avantageux en termes de coût peut être choisi.

De manière générale, il est à noter que les modes de mise en œuvre et de réalisation considérés ci-dessus ont été décrits à titre d'exemples non limitatifs, et que d'autres variantes sont par conséquent envisageables.

Notamment, les exemples de données manquantes dans un profil 11 de provision décrits ne doivent pas être considérés comme exhaustifs.

Aussi, l'invention a été décrite en considérant un terminal 1 de type IoT ou M2M et un deuxième système 3 de communication sans fil de type réseau étendu bas débit et basse consommation à bande ultra étroite. Rien n'exclut cependant, suivant d'autres exemples, de considérer d'autres types de terminaux ou d'autres types de systèmes de communication sans fil. Le deuxième système 3 de communication sans fil est néanmoins choisi de préférence de telle sorte qu'il permette de maintenir une connectivité entre un réseau 30 d'assistance et le terminal 1 pour des coûts nettement inférieurs aux coûts nécessaires pour maintenir une connectivité entre le terminal 1 et un réseau 21 d'accès du premier système 2 de communication sans fil.

## Revendications

1. Carte à puce configurable à distance destinée à être intégrée de manière inamovible dans un terminal (1), dite carte (10) eUICC, mémorisant un profil (11) de provision comportant des données utilisées par ledit terminal (1) pour communiquer avec un réseau d'accès d'un premier système (2) de communication sans fil, dit réseau (21) de provision, afin de configurer sur ladite carte (10) eUICC un profil (12) opérationnel comportant des données relatives à un abonnement souscrit par un utilisateur (4) du terminal (1) auprès d'un opérateur (220) d'un autre réseau d'accès dudit premier système (2) de communication sans fil, dit réseau (22) opérationnel, ladite carte (10) eUICC étant **caractérisée en ce que** :
- le profil (11) de provision est incomplet, **en ce que** une ou plusieurs données (111) manquantes indispensables à l'établissement d'une communication entre le terminal (1) et le réseau (21) de provision ne sont pas définies par défaut dans le profil (11) de provision,
- ladite carte (10) eUICC comporte un profil (13) d'assistance comportant des applications et des données permettant l'accès dudit terminal (1) à un réseau d'accès d'un deuxième système (3) de communication sans fil, dit réseau (30) d'assistance, ledit deuxième système (3) de communication sans fil étant distinct dudit premier système (2) de communication sans fil,
- ladite carte (10) eUICC est configurée pour compléter le profil (11) de provision avec les données (111) manquantes obtenues par le terminal (1) en établissant une communication préalable avec le réseau d'assistance.

2. Carte (10) eUICC selon la revendication 1 pour laquelle les données (111) manquantes au profil (11) de provision comportent l'un au moins des éléments suivants:
- une indication que le profil (11) de provision est actif,
- une partie au moins d'un identifiant unique, dit IMSI, du profil (11) de provision auprès du réseau (21) de provision,
- un identifiant d'un algorithme d'authentification et/ou une clé d'authentification, dite clé Ki, du profil (11) de provision,
- un identifiant d'un réseau d'accès du premier système (2) de communication sans fil, dit réseau d'itinérance, lié au réseau (21) de provision.

3. Carte (10) eUICC selon l'une des revendications 1 à 2 pour laquelle le profil (11) de provision comporte un ensemble de valeurs possibles préconfigurées pour au moins une donnée (111) manquante, et un identifiant d'une valeur dudit ensemble est obtenue à travers ladite communication préalable établie entre le terminal (1) et le réseau (30) d'assistance.

4. Carte (10) eUICC selon l'une des revendications 1 à 3 **caractérisée en ce que** :
- la carte (10) eUICC comporte plusieurs profils (11) de provision incomplets,
- la carte (10) eUICC est configurée pour déterminer un profil (11) de provision à utiliser pour configurer à distance la carte (10) eUICC à partir d'un identifiant obtenu à travers la communication préalable établie entre le terminal (1) et le réseau (30) d'assistance.

5. Terminal (1) comportant une carte (10) eUICC selon l'une des revendications 1 à 4.

6. Terminal (1) selon la revendication 5 **caractérisé en ce que** ledit terminal (1) est configuré pour déterminer une information sur une position géographique courante du terminal (1) et pour transmettre cette information au réseau (30) d'assistance à travers ladite communication préalable.

7. Terminal (1) selon l'une des revendications 5 à 6, relié à un réseau (30) d'assistance, ledit réseau (30) d'assistance étant relié à une entité (5) de gestion d'abonnements, ledit réseau (30) d'assistance étant configuré pour :
- recevoir une requête (6030) du terminal (1) visant à obtenir les données (111) manquantes du profil (11) de provision incomplet,
- transmettre la requête à l'entité (5) de gestion d'abonnement,
- recevoir de l'entité (5) de gestion d'abonnement les données (111) manquantes du profil (11) de provision incomplet,
- envoyer au terminal (1) les données (111) manquantes du profil (11) de provision incomplet.

8. Terminal relié au réseau (30) d'assistance selon la revendication 7, ledit réseau (30) d'assistance est configuré pour fournir une information sur une position géographique courante du terminal (1) à l'entité (5) de gestion d'abonnements.

9. Terminal relié au réseau (30) d'assistance selon l'une des revendications 7 à 8 **caractérisé en ce que** ledit réseau (30) d'assistance est un réseau étendu de communication sans fil bas débit.

10. Terminal (1) selon l'une des revendications 5 à 6, relié à une entité (5) de gestion d'abonnement d'une carte à puce dudit terminal, ladite entité (5) de gestion d'abonnement reliée à un réseau (30) d'assistance selon l'une des revendications 7 à 9, ladite entité (5) de gestion d'abonnements étant configurée pour :
- recevoir du réseau d'assistance une requête visant à obtenir les données (111) manquantes du profil (11) de provision incomplet du terminal (1),
- envoyer au réseau (30) d'assistance les données (111) manquantes du profil (11) de provision incomplet.

11. Terminal relié à l'entité (5) de gestion d'abonnements selon la revendication 10, ladite entité (5) de gestion d'abonnements est configurée pour déterminer l'une au moins des données (111) manquantes à un profil (11) de provision incomplet de la carte (10) eUICC du terminal (1) en fonction d'une information sur une position géographique courante du terminal (1).

12. Système (7) comportant une entité (5) de gestion d'abonnement selon l'une des revendications 10 à 11, au moins un terminal (1) selon l'une des revendications 5 à 6, ainsi qu'un premier (2) et un deuxième (3) systèmes de communication sans fil distincts, ledit deuxième système (3) de communication sans fil comportant un réseau (30) d'assistance selon l'une des revendications 7 à 9.

13. Procédé (100) d'assistance pour configurer à distance une carte (10) eUICC d'un terminal (1), mis en œuvre par un système (7) selon la revendication 12, et comportant les étapes principales suivantes:
- envoi d'une requête (6030) par le terminal (1) sur le réseau (30) d'assistance du deuxième système (3) de communication sans fil pour compléter un profil (11) de provision de ladite carte (10) eUICC,
- obtention (6040) de données (111) manquantes audit profil (11) de provision par le réseau (30) d'assistance auprès de l'entité (5) de gestion d'abonnements,
- envoi (6050) des informations obtenues au terminal (1) sur le réseau (30) d'assistance,
- mise à jour (6060), par la carte (10) eUICC, du profil (11) de provision avec les informations obtenues,
- configuration (6080) à distance de la carte (10) eUICC à travers un réseau (21) de provision dudit premier système (2) de communication sans fil à l'aide du profil (11) de provision complété.

14. Procédé (100) selon la revendication 13 dans lequel une partie au moins des informations obtenues par le réseau (30) d'assistance auprès de l'entité (5) de gestion d'abonnements sont définies en fonction d'une information sur une position géographique courante du terminal (1).

## Patentansprüche

1. Fernkonfigurierbare Chipkarte, die dazu bestimmt ist, in nicht abnehmbarer Form in ein Endgerät (1) integriert zu werden, eUICC-Karte (10) genannt, die ein Provisionsprofil (11) speichert, das Daten beinhaltet, die durch das Endgerät (1) verwendet werden, um mit dem Zugangsnetz eines ersten drahtlosen Kommunikationssystems (2), Provisionsnetz (21) genannt, zu kommunizieren, um auf der eUICC-Karte (10) ein Betriebsprofil (12) zu konfigurieren, welches Daten in Bezug auf ein Abonnement beinhaltet, das von einem Nutzer (4) des Endgerätes (1) bei einem Provider (220) eines anderen Zugangsnetzes des ersten drahtlosen Kommunikationssystems (2) abgeschlossen wird, Betriebsnetz (22) genannt, wobei die eUICC-Karte (10) **dadurch gekennzeichnet ist, dass**:
- das Provisionsprofil (11) unvollständig ist, dadurch, dass ein oder mehrere fehlende Daten (111), die für den Aufbau einer Kommunikation zwischen dem Endgerät (1) und dem Provisionsnetz (21) unverzichtbar sind, nicht standardgemäß in dem Provisionsprofil (11) definiert sind,
- die eUICC-Karte (10) ein Assistenzprofil (13) beinhaltet, welches Anwendungen und Daten beinhaltet, die den Zugang des Endgerätes (1) zu einem Zugangsnetz eines zweiten drahtlosen Kommunikationssystems (3) ermöglichen, Assistenznetz (30) genannt, wobei sich das zweite drahtlose Kommunikationssystem (3) von dem ersten drahtlosen Kommunikationssystem (2) unterscheidet,
- die eUICC-Karte (10) konfiguriert ist, um das Provisionsprofil (11) mit den fehlenden Daten (111) zu ergänzen, die von dem Endgerät (1) durch Aufbauen einer vorangehenden Kommunikation mit dem Assistenznetz erhalten werden.

2. eUICC-Karte (10) nach Anspruch 1, wobei die fehlenden Daten (111) für das Provisionsprofil (11) mindestens eines der folgenden Elemente beinhalten:
- eine Anzeige, dass das Provisionsprofil (11) aktiv ist,
- mindestens einen Teil einer eindeutigen Kennung, IMSI genannt, des Provisionsprofils (11) im Provisionsnetz (21),
- eine Kennung eines Authentifizierungsalgorithmus und/oder eines Authentifizierungsschlüssels, Ki-Schlüssel genannt, des Provisionsprofils (11),
- eine Kennung eines Zugangsnetzes des ersten drahtlosen Kommunikationssystems (2), Roaming-Netz genannt, in Verbindung mit dem Provisionsnetz (21).

3. eUICC-Karte (10) nach einem der Ansprüche 1 bis 2, wobei das Provisionsprofil (11) eine Reihe von möglichen vorkonfigurierten Werten für mindestens ein fehlendes Datum (111) beinhaltet, und eine Kennung für einen Wert der Reihe anhand der vorangehenden Kommunikation erhalten wird, die zwischen dem Endgerät (1) und dem Assistenznetz (30) aufgebaut wird.

4. eUICC-Karte (10) nach einem der Ansprüche 1 bis 3, **dadurch gekennzeichnet, dass**:
- die eUICC-Karte (10) mehrere unvollständige Provisionsprofile (11) beinhaltet,
- die eUICC-Karte (10) konfiguriert ist, um ein Provisionsprofil (11) zu bestimmen, das zu verwenden ist, um die eUICC-Karte (10) anhand einer Kennung aus der Ferne zu konfigurieren, die anhand der vorangehenden Kommunikation erhalten wird, die zwischen dem Endgerät (1) und dem Assistenznetz (30) aufgebaut wird.

5. Endgerät (1), welches eine eUICC-Karte (10) nach einem der Ansprüche 1 bis 4 beinhaltet.

6. Endgerät (1) nach Anspruch 5, **dadurch gekennzeichnet, dass** das Endgerät (1) konfiguriert ist, um eine Information über eine laufende geografische Position des Endgeräts (1) zu bestimmen, und um diese Information anhand der vorangehenden Kommunikation zum Assistenznetz (30) zu übertragen.

7. Endgerät (1) nach einem der Ansprüche 5 bis 6, welches mit einem Assistenznetz (30) verbunden ist, wobei das Assistenznetz (30) mit einer Entität (5) zur Abonnementverwaltung verbunden ist, wobei das Assistenznetz (30) konfiguriert ist, zum:
- Empfangen einer Anfrage (6030) des Endgeräts (1), die darauf abzielt, die fehlenden Daten (111) des unvollständigen Provisionsprofils (11) zu erhalten,
- Übertragen der Anfrage an die Entität (5) zur Abonnementverwaltung,
- Empfangen durch die Entität (5) zur Abonnementverwaltung der fehlenden Daten (111) des unvollständigen Provisionsprofils (11),
- Senden an das Endgerät (1) der fehlenden Daten (111) des unvollständigen Provisionsprofils (11).

8. Endgerät, welches mit einem Assistenznetz (30) verbunden ist, nach Anspruch 7, wobei das Assistenznetz (30) konfiguriert ist, um der Entität (5) zur Abonnementverwaltung eine Information über die laufende geografische Position des Endgeräts (1) bereitzustellen.

9. Endgerät, welches mit einem Assistenznetz (30) verbunden ist, nach einem der Ansprüche 7 bis 8, **dadurch gekennzeichnet, dass** das Assistenznetz (30) ein umfassendes drahtloses Kommunikationsnetz mit niedriger Datenrate ist.

10. Endgerät (1) nach einem der Ansprüche 5 bis 6, welches mit einer Entität (5) zur Abonnementverwaltung einer Chipkarte des Endgeräts verbunden ist, wobei die Entität (5) zur Abonnementverwaltung mit einem Assistenznetz (30) nach einem der Ansprüche 7 bis 9 verbunden ist, wobei die Entität (5) zur Abonnementverwaltung konfiguriert ist zum:
- Empfangen vom Assistenznetz einer Anfrage, die darauf abzielt, die fehlenden Daten (111) des unvollständigen Provisionsprofils (11) des Endgeräts (1) zu erhalten,
- Senden an das Assistenznetz (30) der fehlenden Daten (111) des unvollständigen Provisionsprofils (11).

11. Endgerät, welches mit einer Entität (5) zur Abonnementverwaltung verbunden ist, nach Anspruch 10, wobei die Entität (5) zur Abonnementverwaltung konfiguriert ist, um mindestens eines der fehlenden Daten (111) des unvollständigen Provisionsprofils (11) der eUICC-Karte (10) des Endgeräts (1) in Abhängigkeit von einer Information über eine laufende geografische Position des Endgeräts (1) zu bestimmen.

12. System (7), welches eine Entität (5) zur Abonnementverwaltung nach einem der Ansprüche 10 bis 11, mindestens ein Endgerät (1) nach einem der Ansprüche 5 bis 6, sowie ein erstes (2) und ein zweites (3) unterschiedliches drahtloses Kommunikationssystem beinhaltet, wobei das zweite drahtlose Kommunikationssystem (3) ein Assistenznetz (30) nach einem der Ansprüche 7 bis 9 beinhaltet.

13. Assistenzverfahren (100) zur Fernkonfiguration einer eUICC-Karte (10) eines Endgeräts (1), das von einem System (7) nach Anspruch 12 umgesetzt wird, und die folgenden Hauptschritte beinhaltend:
- Senden einer Anfrage (6030) durch das Endgerät (1) in dem Assistenznetz (30) des zweiten drahtlosen Kommunikationssystems (3) zum Ergänzen eines Provisionsprofils (11) der eUICC-Karte (10),
- Erhalten (6040) von fehlenden Daten (111) für das Provisionsprofil (11) durch das Assistenznetz (30) bei der Entität (5) zur Abonnementverwaltung,
- Senden (6050) der erhaltenen Informationen an das Endgerät (1) in dem Assistenznetz (30),
- Aktualisieren (6060) durch die eUICC-Karte (10) des Provisionsprofils (11) mit den erhaltenen Informationen,
- Aus der Ferne Konfigurieren (6080) der eUICC-Karte (10) anhand eines Provisionsnetzes (21) des ersten drahtlosen Kommunikationssystems (2) mithilfe des vervollständigten Provisionsprofils (11).

14. Verfahren (100) nach Anspruch 13, wobei mindestens ein Teil der vom Assistenznetz (30) bei der Entität (5) zur Abonnementverwaltung erhaltenen Informationen in Abhängigkeit von einer Information über die laufende geografische Position des Endgeräts (1) definiert werden.

## Claims

1. A remotely configurable integrated circuit card intended to be irremovably integrated into a terminal (1), called an eUICC card (10), storing a provision profile (11) including data items used by said terminal (1) to communicate with an access network of a first wireless communication system (2), called provision network (21), in order to configure on said eUICC card (10) an operational profile (12) including data items relating to a subscribed subscription by a user (4) of the terminal (1) with an operator (220) of another access network of said first wireless communication system (2), called operational network (22), said eUICC card (10) being **characterised in that**:
- the provision profile (11) is incomplete, **in that** one or more missing data items (111) essential for establishing communication between the terminal (1) and the provision network (21) are not defined by default in the provision profile (11),
- said eUICC card (10) includes an assistance profile (13) including applications and data items allowing access of said terminal (1) to an access network of a second wireless communication system (3), called assistance network (30), said second wireless communication system (3) being separate from said first wireless communication system (2),
- said eUICC card (10) is configured to complete the provision profile (11) with the missing data items (111) obtained by the terminal (1) by establishing prior communication with the assistance network.

2. The eUICC card (10) according to claim 1 for which the data items (111) missing from the provision profile (11) include at least one of the following elements:
- an indication that the provision profile (11) is active,
- at least part of a unique identifier, called IMSI, of the provision profile (11) with the provision network (21),
- an identifier of an authentication algorithm and/or an authentication key, called key Ki, of the provision profile (11),
- an identifier of an access network of the first wireless communication system (2), called the roaming network, linked to the provision network (21).

3. The eUICC card (10) according to one of claims 1 to 2 for which the provision profile (11) includes a set of possible pre-configured values for at least one missing data item (111), and an identifier of a value of said set is obtained through said prior communication established between the terminal (1) and the assistance network (30).

4. The eUICC card (10) according to one of claims 1 to 3 **characterised in that**:
- the eUICC card (10) includes several incomplete provision profiles (11),
- the eUICC card (10) is configured to determine a provision profile (11) to be used to remotely configure the eUICC card (10) from an identifier obtained through prior communication established between the terminal (1) and the assistance network (30).

5. A terminal (1) including an eUICC card (10) according to one of claims 1 to 4.

6. The terminal (1) according to claim 5 **characterised in that** said terminal (1) is configured to determine information on a current geographical position of the terminal (1) and to transmit this information to the assistance network (30) through said prior communication.

7. The terminal (1) according to one of claims 5 to 6, connected to an assistance network (30), said assistance network (30) being connected to a subscription management entity (5), said assistance network (30) being configured to:
- receive a request (6030) from the terminal (1) aiming at obtaining the data items (111) missing from the incomplete provision profile (11),
- transmit the request to the subscription management entity (5),
- receive from the subscription management entity (5) the data items (111) missing from the incomplete provision profile (11),
- send to the terminal (1) the data items (111) missing from the incomplete provision profile (11).

8. The terminal connected to the assistance network (30) according to claim 7, said assistance network (30) is configured to provide information on a current geographical position of the terminal (1) to the subscription management entity (5).

9. The terminal connected to the assistance network (30) according to one of claims 7 to 8 **characterised in that** said assistance network (30) is an extended low-speed wireless communication network.

10. The terminal (1) according to one of claims 5 to 6, connected to an integrated circuit card subscription management entity (5) of said terminal, said subscription management entity (5) connected to an assistance network (30) according to one of claims 7 to 9, said subscription management entity (5) being configured to:
- receive from the assistance network a request aiming at obtaining the data items (111) missing from the incomplete provision profile (11) of the terminal (1),
- send to the assistance network (30) the data items (111) missing from the incomplete provision profile (11).

11. The terminal connected to the subscription management entity (5) according to claim 10, said subscription management entity (5) is configured to determine at least one of the data items (111) missing from an incomplete provision profile (11) of the eUICC card (10) of the terminal (1) according to information on a current geographical position of the terminal (1).

12. A system (7) including a subscription management entity (5) according to one of claims 10 to 11, at least one terminal (1) according to one of claims 5 to 6, as well as a first (2) and a second (3) separate wireless communication system, said second wireless communication system (3) including an assistance network (30) according to one of claims 7 to 9.

13. An assistance method (100) for remotely configuring an eUICC card (10) of a terminal (1), implemented by a system (7) according to claim 12, and including the following main steps:
- sending a request (6030) by the terminal (1) on the assistance network (30) of the second wireless communication system (3) to complete a provision profile (11) of said eUICC card (10),
- obtaining (6040) data items (111) missing from said provision profile (11) by the assistance network (30) from the subscription management entity (5),
- sending (6050) information obtained to the terminal (1) on the assistance network (30),
- updating (6060), by the eUICC card (10), the provision profile (11) with the information obtained,
- remotely configuring (6080) the eUICC card (10) through a provision network (21) of said first wireless communication system (2) using the completed provision profile (11).

14. The method (100) according to claim 13 wherein at least part of the information obtained by the assistance network (30) from the subscription management entity (5) is defined according to information on a current geographical position of the terminal (1).
